# EUROPÄISCHE PATENTSCHRIFT

(11) **EP 1 106 289 B1**
(45) Veröffentlichungstag und Bekanntmachung des Hinweises auf die Patenterteilung: **03.09.2003**
(21) Anmeldenummer: 00123958.1
(22) Anmeldetag: 03.11.2000
(51) Int. Cl.: B23D 31/00

(54) **Bruchtrenn-Vorrichtung für eine Lageranordnung eines Bauteiles, insbesondere Kfz-Bauteil**
Connecting rod fracturing machine
Dispositif de cassage d'une bielle

(30) Priorität: 07.12.1999 DE 19958807
(43) Veröffentlichungstag der Anmeldung: 13.06.2001
(73) Patentinhaber: Bayerische Motoren Werke Aktiengesellschaft, 80809 München (DE)
(72) Erfinder: Wiesemann, Johann, 80992 München (DE); Luchner, Clemens, 85598 Baldham (DE)

(56) Entgegenhaltungen:
- WO-A-98/33616
- US-A- 4 768 694

## Beschreibung

Die Erfindung bezieht sich nach dem Oberbegriff des Patentanspruches 1 auf eine Bruchtrenn-Vorrichtung für eine Lageranordnung eines Bauteiles, insbesondere Kfz-Bauteil, wobei die Vorrichtung eine das Bauteil fixierende Positioniereinrichtung sowie eine einen Crackdom in eine jeweilige Lageranordnung mit relativ kleinem Umfangsspiel einführende Zustelleinrichtung umfasst, und der hohl ausgebildete Crackdorn eine am Umfang angeordnete Ausnehmung zur beweglich geführten Anordnung eines dem Bruchtrennen dienenden Spreizelementes aufweist, das mittels einer im hohlen Crackdom vorgesehenen Betätigungseinrichtung zur Bruchtrennung einer jeweiligen Lageranordnung gesteuert ist, wobei der Crackdom diametral des gesteuert betätigten Spreizelementes in der Lageranordnung spielfrei aufliegt.

Eine derartige Bruchtrenn-Vorrichtung ist beispielsweise aus der EP 0 167 320 A bekannt. Diese bekannte Vorrichtung dient zum gleichzeitigen Brechen mehrerer Lageranordnungen eines Bauteiles, vorzugsweise bei einem Kurbelgehäuse einer Hubkolben-Brennkraftmaschine, wofür der Crackdorn mit einer der Anzahl der Lageranordnungen entsprechenden Anzahl an Spreizelementen ausgerüstet ist, die zielführend gleichzeitig gesteuert betätigt sind. Zur Erzielung qualitativ hochwertiger Bruchtrennflächen dürfen die Außenkonturen der Spreizelemente und des Crackdomes von der Bohrungs-Kontur der Lageranordnungen nur geringfügig abweichen, so dass für die axiale Einführung bzw. Positionierung des Crackdomes in sämtlichen Lageranordnungen ein relativ kleines Umfangsspiel verbleibt. Der somit fliegend in den Lageranordnungen eingeführte Crackdorn ist zur Erzielung der gewünschten Qualität der Bruchtrennflächen zumindest während des Bruchtrennens zur einwandfreien Auflage in den Lageranordnungen zu bringen. Zur Erzielung der spielfreien Auflage des Crackdomes in den Lageranordnungen kann der Crackdom abgesenkt oder das Bauteil mit den Lageranordnungen angehoben werden. Hinweise darauf sind jedoch der gattungsbildenden EP 0 167 320 A nicht zu entnehmen.

Der Erfindung liegt die Aufgabe zugrunde, für die gattungsgemäße Bruchtrenn-Vorrichtung mit einem in einer oder mehreren Lageranordnungen fliegend mit Umfangsspiel einführbar angeordneten Crackdom eine Möglichkeit der selbsttätigen Anpassung des Crackdomes zur einwandfreien Auflage in den Lageranordnungen mit einfachen Mitteln aufzuzeigen.

Diese Aufgabe ist mit dem Patentanspruch 1 dadurch gelöst, dass der Crackdom in seinem fliegend angeordneten Abschnitt entgegengesetzten Endbereich mit relativ großem Umfangsspiel in einer Aufnahme der Zustelleinrichtung über elastisch nachgiebige Stützelemente schwimmend gelagert ist derart, dass der Crackdorn beim Bruchtrennen zur spielfreien Auflage in der jeweiligen Lageranordnung gegen den elastischen Widerstand der Stützelemente in der Aufnahme der Zustelleinrichtung quer zu seiner Längserstreckung verlagerbar ist.

Mit der Erfindung ist in vorteilhafter Weise unter Verwendung einfacher Mittel eine selbsttätige Lage-Anpassung zur spielfreien Auflage in der jeweiligen Lageranordnung erzielt. Die erfindungsgemäße Anpassung erfolgt in vorteilhafter Weise mit Auslösen der Bruchtrennkraft, so dass gesonderte Einstellvorrichtungen in Fortfall kommen. Mit der Erfindung lassen sich femer aus der Positioniereinrichtung und/oder von der Zustelleinrichtung des Crackdomes herrührende Fluchtungsfehler zwischen den Lageranordnungen und dem Crackdom vorteilhaft ausgleichen.

Einen weiteren Vorteil ergibt die Erfindung in Verbindung mit einer vorgeschlagenen Ausgestaltung, wonach der Crackdom mit einem einzigen Spreizelement ausgerüstet ist, wobei der Crackdorn bei mehreren Lageranordnungen eines Bauteiles über die Zustelleinrichtung getaktet mit seinem Spreizelement in jeder Lageranordnung positioniert ist. Der Vorteil ist in der Einzel-Bruchtrennung mehrerer Lageranordnungen eines Bauteiles zu sehen gegenüber einer gleichzeitigen Bruchtrennung sämtlicher Lageranordnungen eines Bauteiles, wobei die Einzel-Bruchtrennung in Verbindung mit der Erfindung im Gegensatz zur gleichzeitigen Mehrfach-Bruchtrennung für jede Lageranordnung gleichbleibende Voraussetzungen ergibt und somit gleiche Qualität für sämtliche Bruchtrennflächen erzielt ist.

Für eine weitere vorteilhafte Ausgestaltung der Erfindung wird bezüglich der elastisch nachgiebigen Stützelemente vorgeschlagen, dass diese als gummielastische Propfen ausgebildet sind, die mittels Schraubbolzen in den die Propfen relativ zum Crackdom positionierenden Bohrungen in ihrer Vorspannung einstellbar angeordnet sind. Damit lässt sich der Crackdom in seiner erforderlichen Fluchtungsrichtung jederzeit in einwandfreier und einfacher Weise neu justieren.

Die Erfindung bildet ferner einwandfreie Voraussetzungen für ein einstufiges Bruchtrennen, wofür zur rotationsfreien Bruchtrennung insbesondere eine Haltezangen-Einrichtung vorgeschlagen ist, wie sie in der deutschen Patentanmeldung 198 53 307 vorgeschlagen wurde.

Die Erfindung ist anhand von in der Zeichnung dargestellten Ausführungsbeispielen beschrieben. Es zeigt
- Figur 1: ein Ausführungsbeispiel einer erfindungsgemäßen Bruchtrenn-Vorrichtung,
- Figur 2: eine Zustelleinrichtung im Querschnitt gemäß der Linie II-II der Bruchtrenn-Vorrichtung nach Figur 1 mit in tangential schneidenden Querbohrungen angeordneten gummielastischen Propfen,
- Figur 3: eine weitere, nicht näher dargestellte Zustelleinrichtung im Querschnitt mit kreuzweise schneidenden Querbohrungen für gummielastische Propfen als Stützelemente zur schwimmenden Lagerung eines Crackdomes.

Eine Bruchtrenn-Vorrichtung 1 für eine Lageranordnung 2 eines Bauteiles 3, insbesondere eines Kurbelgehäuses für eine nicht dargestellte Brennkraftmaschine, umfasst eine das Bauteil 3 fixierende, nicht gezeigte Positioniereinrichtung sowie eine einen Crackdom 4 in eine jeweilige Lageranordnung 2 mit relativ kleinem Umfangsspiel einführende Zustelleinrichtung 5. Der hohl ausgebildete Crackdom 4 weist eine am Umfang angeordnete Ausnehmung 6 zur beweglich geführten Anordnung eines dem Bruchtrennen dienenden Spreizelementes 7 auf, das mittels einer im hohlen Crackdorn 4 vorgesehenen Betätigungseinrichtung 8 zur Bruchtrennung einer jeweiligen Lageranordnung 2 gesteuert ist. Zur Erzielung qualitativ einwandfreier Bruchtrennflächen liegt der Crackdom 4 diametral des gesteuert betätigten Spreizelementes 7 in der Lageranordnung 2 spielfrei auf.

Um aufgabengemäß eine selbsttätige Anpassung des Crackdomes 4 zur einwandfreien Auflage in der jeweiligen Lageranordnung zu erzielen, wird vorgeschlagen, dass der Crackdom 4 in seinem dem fliegend angeordneten Abschnitt 4' entgegengesetzten Endbereich 4" mit relativ großem Umfangsspiel 9 in einer Aufnahme 10 der Zustelleinrichtung 5 über elastisch nachgiebige Stützelemente 11 schwimmend gelagert ist derart, dass der Crackdom 4 beim Bruchtrennen zur spielfreien Auflage in der jeweiligen Lageranordnung 2 gegen den elastischen Widerstand der Stützelemente 11 in der Aufnahme 10 der Zustelleinrichtung 5 quer zu seiner Längserstreckung verlagerbar ist.

In vorteilhaft einfacher baulicher Ausgestaltung der Erfindung umfasst die Vorrichtung 1 mit einer gemäß Pfeil "A" gerad geführt angeordneten Zustelleinrichtung 5 einen am freien Ende des Crackdornes 4 unter Zwischenschaltung einer Halteplatte 12 fest angeordneten Hubzylinder 13, der mit einer das Spreizelement 7 über korrespondierende Schrägflächen 14 steuemden Betätigungsstange 8' in Verbindung steht. Weiter ist die Halteplatte 12 mit einem eine gemeinsame Querverlagerung von Crackdom 4 und Hubzylinder 13 zulassenden Spiel 12' mit der Zustelleinrichtung 5 beweglich verbunden angeordnet.

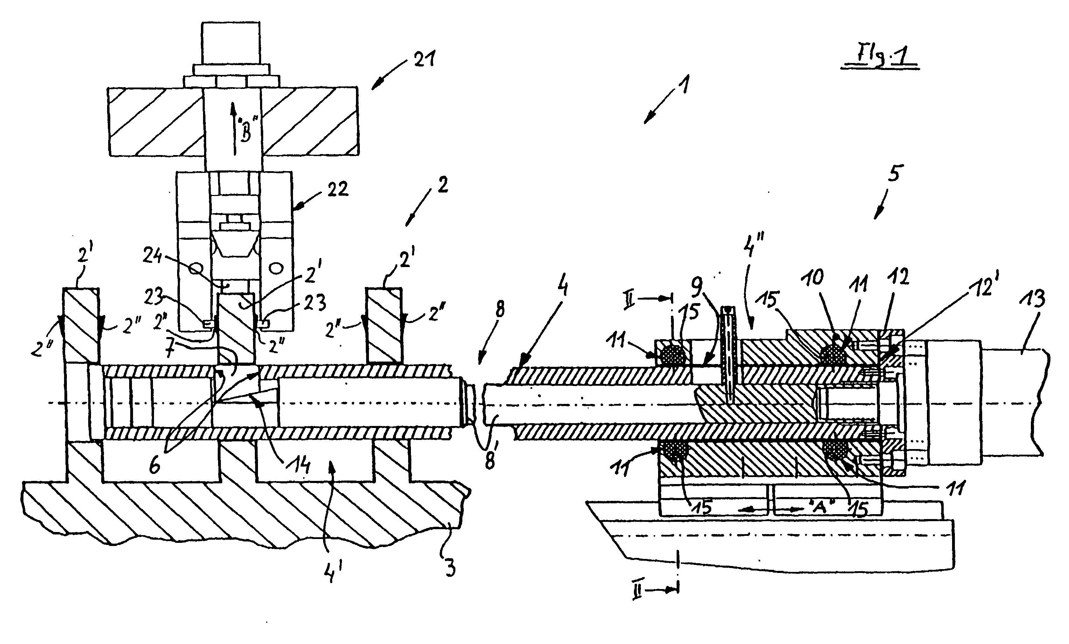

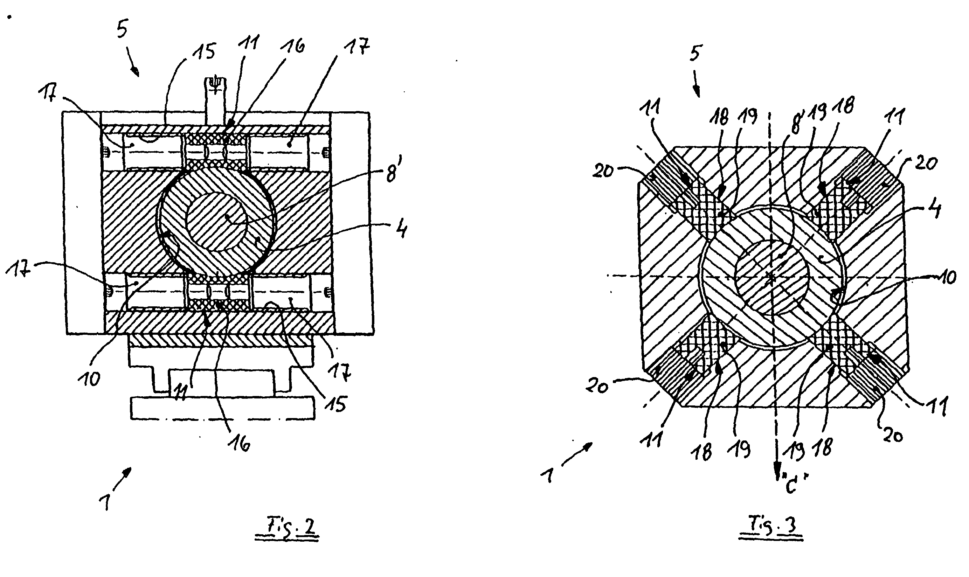

Wie insbesondere aus der Figur 2 näher ersichtlich, ist der Crackdom 4 in der Aufnahme 10 über die Aufnahme 10 in tangential schneidenden Querbohrungen 15 angeordneten, gummielastischen Propfen 16 als Stützelemente 11 schwimmend gelagert, wobei der elastische Widerstand der Propfen 16 mittels in den Querbohrungen 15 vorgesehenen Schraubbolzen 17 veränderbar ist. Mit einem angepassten Zusammendrücken der Propfen 16 mittels der Schraubbolzen 17 kann der Crackdorn 4 entsprechend der vorgegebenen Fluchtungsrichtung durch die Lageranordnungen 2 justiert werden.

Aus Figur 3 ist eine abweichende Anordnung der Stützelemente 11 zu erkennen, wobei der Crackdorn 4 in der Aufnahme 10 über die Aufnahme 10 in kreuzweise schneidenden Querbohrungen 18 angeordnete, gummielastische Propfen 19 als Stützelemente 11 schwimmend gelagert ist, wobei die mittels Schraubbolzen 20 pressbaren Propfen 19 relativ zur Richtung gemäß Pfeil "C" der Querverlagerung des Crackdornes 4 unter einem Winkel von ca. 45° an diesem angreifen.

Wie aus Figur 1 ersichtlich, ist der Crackdom 4 in beiden Endbereichen der Aufnahme 10 elastisch abgestützt, womit eine stabile und fein einstellbare Justierung des Crackdornes 4 möglich ist.

Die vorbeschriebene elastische Abstützung des Crackdornes 4 auf breiter Basis in der jeweiligen Aufnahme 10 erlaubt in vorteilhafter Weise, dass der Crackdom 4 mit einem einzigen Spreizelement 7 ausgerüstet ist, wobei der Crackdorn 4 bei mehreren Lageranordnungen 2 eines Bauteiles 3 über die Zustelleinrichtung 5 getaktet mit seinem einzigen Spreizelement 7 in jeder Lageranordnung 2 positioniert wird. Mit dieser Ausgestaltung sind für jede Lageranordnung 2 eines Bauteiles 3 identische Voraussetzungen geschaffen für qualitativ hochwertige Bruchtrennflächen der getrennten Teile einer Lageranordnung 2.

Für die Qualität der Bruchtrennflächen ist femer ein einstufiges Bruchtrennen eines Lagerdeckels 2' von einer Lageranordnung 2 maßgebend, wofür der Bruchtrenn-Vorrichtung 1 eine Haltezangen-Einrichtung 21 zugeordnet ist. Diese ist mit einer Haltezange 22 mit beidseitig am Lagerdeckel 2' gesteuert angreifenden Spannelementen 23 in Bruchtrenn-Richtung gemäß Pfeil "B" freibeweglich geführt angeordnet und mit am Lagerdeckel 2' aufsetzbaren Anschlagstempeln 24 ausgerüstet. Mittels der mit am Lagerdeckel 2' gesondert ausgebildeten Keilflächen 2" zusammenwirkenden Spannelemente 23 an der Haltezange 22 ist der Lagerdeckel 2' zur rotationsfreien Bruchtrennung gegen die Anschlagstempel 24 verspannt, wie dies in der deutschen Patentanmeldung 198 53 307 näher beschrieben ist.

Im Rahmen der Erfindung kann der Crackdom 4 auch mehrere, gegebenenfalls unter Auslassung einer oder mehrerer Lageranordnungen 2 angeordnete Spreizelemente 7 umfassen.

Weiter bleibt es im Rahmen der Erfindung, dass bei einem Bauteil 3 mit mehreren, miteinander fluchtenden Lageranordnungen 2 abschnittsweise zwei einander entgegengesetzt in der Bruchtrenn-Vorrichtung 1 angeordnete Crackdorne 4 zum Bruchtrennen dienen.

## Patentansprüche

1. Bruchtrenn-Vorrichtung für eine Lageranordnung eines Bauteiles, insbesondere Kfz-Bauteil,
- wobei die Vorrichtung (1) eine das Bauteil (3) fixierende Positioniereinrichtung sowie eine einen Crackdom (4) in eine jeweilige Lageranordnung (2) mit relativ kleinem Umfangsspiel einführende Zustelleinrichtung (5) umfasst, und
- der hohl ausgebildete Crackdom (4) eine am Umfang angeordnete Ausnehmung (6) zur beweglich geführten Anordnung eines dem Bruchtrennen dienenden Spreizelementes (7) aufweist, das
- mittels einer im hohlen Crackdorn (4) vorgesehenen Betätigungseinrichtung (8) zur Bruchtrennung einer jeweiligen Lageranordnung (2) gesteuert ist, wobei
- der Crackdom (4) diametral des gesteuert betätigten Spreizelementes (7) in der Lageranordnung (2) spielfrei aufliegt,
**dadurch gekennzeichnet,**
- **dass** der Crackdorn (4) in seinem dem fliegend angeordneten Abschnitt (4') entgegengesetzten Endbereich (4") mit relativ großem Umfangsspiel (9) in einer Aufnahme (10) der Zustelleinrichtung (5) über elastisch nachgiebige Stützelemente (11) schwimmend gelagert ist derart, dass
- der Crackdom (4) beim Bruchtrennen zur spielfreien Auflage in der jeweiligen Lageranordnung (2) gegen den elastischen Widerstand der Stützelemente (11) in der Aufnahme (10) der Zustelleinrichtung (5) quer zu seiner Längserstreckung verlagerbar ist.

2. Vorrichtung nach Anspruch 1, **dadurch gekennzeichnet,**
- **dass** die in/an der Vorrichtung (1) gerad geführt (Pfeil "A") angeordnete Zustelleinrichtung (5) einen am freien Ende des Crackdomes (4) unter Zwischenschaltung einer Halteplatte (12) fest angeordneten Hubzylinder (13) umfasst, der
- mit einer das Spreizelement (7) über korrespondierende Schrägflächen (14) steuernden Betätigungsstange (8') in Verbindung steht und wobei
- die Halteplatte (12) mit einem eine gemeinsame Querverlagerung von Crackdom (4) und Hubzylinder (13) zulassenden Spiel (12') mit der Zustelleinrichtung (5) beweglich verbunden angeordnet ist.

3. Vorrichtung nach Anspruch 1 oder 2, **dadurch gekennzeichnet,**
- **dass** der Crackdorn (4) in der Aufnahme (10) über die Aufnahme (10) in tangential schneidenden Querbohrungen (15) angeordnete, gummielastische Propfen (16) als Stützelemente (11) schwimmend gelagert ist, wobei
- der elastische Widerstand der Propfen (16) mittels in den Querbohrungen (15) vorgesehenen Schraubbolzen (17) veränderbar ist.

4. Vorrichtung nach Anspruch 1 oder 2, **dadurch gekennzeichnet,**
- **dass** der Crackdorn (4) in der Aufnahme (10) über die Aufnahme (10) in kreuzweise schneidenden Querbohrungen (18) angeordnete, gummielastische Propfen (19) als Stützelemente (11) schwimmend gelagert ist, wobei
- die mittels Schraubbolzen (20) pressbaren Propfen (19) relativ zur Richtung (Pfeil "C") der Querverlagerung des Crackdomes (4) unter einem Winkel von ca. 45° an diesem angreifen.

5. Vorrichtung nach Anspruch 3 oder 4, **dadurch gekennzeichnet, dass** der Crackdorn (4) in beiden Endbereichen der Aufnahme (10) elastisch abgestützt ist.

6. Bruchtrenn-Vorrichtung nach einem oder mehreren *der* Ansprüche 1 bis 5,
**dadurch gekennzeichnet,**
- **dass** femer eine Haltezangen-Einrichtung (21) für ein einstufiges Bruchtrennen eines Lagerdeckels (2') von einer Lageranordnung (2) vorgesehen ist, wobei
- die Haltezange (22) mit beidseitig am Lagerdeckel (2') gesteuert angreifenden Spannelementen (23) in Bruchtrenn-Richtung (Pfeil "B") freibeweglich geführt angeordnet und mit am Lagerdeckel (2') aufsetzbaren Anschlagstempeln (24) ausgerüstet ist, wobei
- mittels der mit am Lagerdeckel (2') gesondert ausgebildeten Keilflächen (2, 2') zusammenwirkenden Spannelemente (23) der Lagerdeckel (2') zur rotationsfreien Bruchtrennung gegen die Anschlagstempel (24) verspannt ist (DE 198 53 307.1).

7. Vorrichtung nach einem der Ansprüche 1 bis 6, **dadurch gekennzeichnet,**
- **dass** der Crackdorn (4) mit einem einzigen Spreizelement (7) ausgerüstet ist, wobei
- der Crackdorn (4) bei mehreren Lageranordnungen (2) eines Bauteiles (3) über die Zustelleinrichtung (5) getaktet mit seinem einzigen Spreizelement (7) in der jeweiligen Lageranordnung (2) positioniert ist.

8. Vorrichtung nach einem der Ansprüche 1 bis 6, **dadurch gekennzeichnet, dass** der Crackdorn (4) mehrere, gegebenenfalls unter Auslassung einer oder mehrerer Lageranordnungen (2) angeordnete Spreizelemente (7) umfasst.

9. Vorrichtung nach einem oder mehreren der Ansprüche 1 bis 8, **dadurch gekennzeichnet, dass** bei einem Bauteil (3) mit mehreren, miteinander fluchtenden Lageranordnungen (2) abschnittsweise zwei einander diametral entgegengesetzt in der Bruchtrenn-Vorrichtung (1) angeordnete Crackdome (4) zum Bruchtrennen dienen.

## Claims

1. A device for cracking apart a bearing arrangement on a component, especially a motor-vehicle component,
- wherein the device (1) comprises a positioning device for fixing the component (3) and a feed device (5) for inserting a crack mandrel (4) into a given bearing arrangement (2) with relatively small peripheral clearance, and
- the crack mandrel (4), which is hollow, has a peripheral recess (6) for a guided arrangement of an expanding element (7) used for cracking apart,
- the expanding element being controlled by an actuating device (8) provided in the hollow crack mandrel (4) for cracking a bearing arrangement (2) apart, wherein
- the crack mandrel (4) rests without clearance in the bearing arrangement (2) diametrally of the controlled expanding element (7),
**characterised in that**
- the end region (4") opposite the floating portion (4') of the crack mandrel (4) is mounted floating, with relatively large peripheral clearance (9), in a holder (10) in the feed device (5) via elastically resilient support elements (11) such that
- during the cracking process the mandrel (4) is movable transversely of its longitudinal extent in the holder (10) of the feed device (5) to obtain a clearance-free seat in the bearing arrangement (2) against the elastic resistance of the support elements (11).

2. A device according to claim 1, **characterised in that**
- the feed device (5), disposed in or on the device (1) and guided in a straight line (arrow "A"), comprises a reciprocating cylinder (13) fixed to the free end of the crack mandrel (4) with interposition of a retaining plate (12),
- the cylinder (13) being connected to an actuating rod (8') which controls the expanding element (7) via corresponding sloping surfaces (14) and wherein
- the retaining plate (12) is movably connected to the feed device (5) with a clearance (12') permitting common transverse displacement of the crack mandrel (4) and the reciprocating cylinder (13).

3. A device according to claim 1 or claim 2, **characterised in that** the crack mandrel (4) is mounted floating in the holder (10) via support elements (11) in the form elastomeric plugs (16) disposed in transverse bores (15) which tangentially intersect the holder (10), wherein
- the elastic resistance of the plugs (16) is adjustable by means of screw bolts (17) provided in the transverse bores (15).

4. A device according to claim 1 or claim 2, **characterised in that**
- the crack mandrel (4) is mounted floating in the holder (10) via support elements (11) in the form of elastomeric plugs (19) disposed in transverse bores (18) which intersect the holder (10) crosswise, wherein
- the plugs (19), pressable by screw bolts (20), engage the crack mandrel (4) at an angle of about 45° relative to the direction (arrow "C") of the transverse displacement of the crack mandrel (4).

5. A device according to claim 3 or claim 4, **characterised in that** the crack mandrel (4) is elastically supported in both end regions of the holder (10).

6. A cracking-apart device according to one or more of claims 1 to 5,
**characterised in that**
- a clamp device (21) is also provided for single-stage cracking apart of a bearing cover (2') on a bearing arrangement (2), wherein
- the clamp (22) is guided for free motion in the cracking-apart direction (arrow "B") by gripping elements (23) engaging in controlled manner on each side of the bearing cover (2') and is equipped with breaking punches (24) for mounting on the bearing cover (2'), wherein
- the gripping elements (23) co-operate with wedge surfaces (2,2') separately formed on the bearing cover (2') and clamp the bearing cover (2') against the breaking punch (24) so that it can be cracked without rotating (DE 198 53 307.1).

7. A device according to any of claims 1 to 6, **characterised in that**
- the crack mandrel (4) is equipped with a single expanding element (7), wherein
- in the case of a component (3) with a number of bearing arrangements (2), the crack mandrel (4) is positioned by the feed device (5) with its single expanding element (7) successively in each bearing arrangement (2).

8. A device according to any of claims 1 to 6, **characterised in that** the crack mandrel (4) comprises a number of expanding elements (7), disposed if required so as to leave out one or more bearing arrangements (2).

9. A device according to one or more of claims 1 to 8, **characterised in that** in the case of a component (3) with a number of aligned bearing arrangements (2), two crack mandrels (4) diametrically opposite one another in the cracking-apart device (1) are used for cracking each portion.

## Revendications

1. Dispositif de coupure par rupture pour un palier d'une pièce, en particulier d'une pièce de véhicule automobile, dans lequel
- le dispositif (1) comprend un dispositif de positionnement qui immobilise la pièce (3), ainsi qu'un dispositif d'avance (5), qui introduit un mandrin de craquage (4) à chaque fois dans un palier (2) avec un jeu circonférentiel relativement petit, et
- le mandrin de craquage (4), de forme creuse, présente un évidement (6) disposé sur la périphérie, prévu pour l'agencement mobile et guidé d'un élément écarteur (7) servant à la coupure par rupture,
- qui est commandé au moyen d'un dispositif d'actionnement (8) prévu dans le mandrin de craquage creux (4) et destiné à exécuter la coupure par rupture d'un palier (2) à chaque fois,
- le mandrin de craquage (4) s'appuyant sans jeu dans le palier (2) selon un diamètre de l'élément écarteur (7) qui est actionné de façon commandée,
**caractérisé en ce que**
- dans sa région terminale (4") qui est à l'opposé du segment (4') disposé lâche, le mandrin de craquage (4) est monté flottant avec un jeu circonférentiel (9) relativement grand dans un logement (10) du dispositif d'avance (5) par l'intermédiaire d'éléments de soutien (11) capables de céder élastiquement, de telle manière que
- lors de la coupure par rupture, le mandrin de craquage (4) puisse se déplacer transversalement à son extension longitudinale dans le logement (10) du dispositif d'avance (5), à rencontre de la résistance élastique des éléments de soutien (11), pour établir l'appui sans jeu dans chaque palier respectif (2).

2. Dispositif selon la revendication 1,
**caractérisé en ce que**
- le dispositif d'avance (5) disposé guidé en ligne droite (flèche « A ») dans le, ou le long du dispositif (1) comprend un vérin (13) disposé solidairement à l'extrémité libre du mandrin de craquage (4) avec interposition d'une plaque de maintien (12), et
- qui est relié à une tige d'actionnement (8') qui commande l'élément écarteur (7) par l'intermédiaire de surfaces obliques (14) correspondantes, et
- la plaque de maintien (12) est disposée reliée au dispositif d'avance (5) de façon mobile avec un jeu (12') qui admet un déplacement transversal commun du mandrin de craquage (4) et du vérin (13).

3. Dispositif selon la revendication 1 ou 2,
**caractérisé en ce que**
- le mandrin de craquage (4) est monté flottant dans le logement (10) par l'intermédiaire de tampons (16) élastiques à la façon du caoutchouc utilisés comme éléments de soutien (11), disposés dans des perçages transversaux (15) qui coupent tangentiellement le logement (10),
- la résistance élastique des tampons (16) pouvant être modifiée au moyen de vis (17) prévus dans les perçages transversaux (15).

4. Dispositif selon la revendication 1 ou 2,
**caractérisé en ce que**
- le mandrin de craquage (4) est monté flottant dans le logement (10) au moyen de tampons (19) élastiques à la façon du caoutchouc utilisés comme éléments de soutien, disposés dans des perçages transversaux (18) qui coupent le logement (10) en croix,
- les tampons (19), qui peuvent être pressés au moyen de vis (20), attaquant le mandrin de craquage (4) sous un angle d'environ 45 ° par rapport à la direction (flèche « C ») du déplacement transversal du mandrin de craquage (4).

5. Dispositif selon la revendication 3 ou 4,
**caractérisé en ce que**
le mandrin de craquage (4) est soutenu élastiquement dans les deux régions d'extrémité du logement (10).

6. Dispositif de coupure par rupture selon une ou plusieurs des revendications 1 à 5,
**caractérisé en ce qu'**
- en supplément un dispositif de pince de maintien (21) est prévu pour une coupure à un temps d'un couvercle de palier (2') d'un palier (2),
- la pince de maintien (22) qui possède des éléments de serrage (23) commandés pour saisir le couvercle de palier (2') des deux côtés, est guidée en mouvement libre dans la direction de coupure par rupture (flèche « B ») et étant équipée de pistons de butée (24) pouvant être abaissés sur le couvercle de palier (2'),
- le couvercle de palier (2') étant serré contre les pistons de butée (24) au moyen des éléments de serrage (23) qui coopèrent avec des surfaces en forme de coin (2, 2') formées séparément sur le couvercle de palier (2') pour assurer la coupure par rupture sans rotation (DE 198 53 307.1)

7. Dispositif selon une des revendications 1 à 6,
**caractérisé en ce que**
- le mandrin de craquage (4) est équipé d'un unique élément écarteur (7),
- dans le cas de plusieurs paliers (2) sur la pièce (3), le mandrin de craquage (4) est positionné cycliquement avec son unique élément écarteur (7) dans le palier (2) considéré, par l'intermédiaire du dispositif d'avance (5).

8. Dispositif selon une des revendications 1 à 6,
**caractérisé en ce que**
le mandrin de craquage (4) comprend plusieurs éléments écarteurs (7) éventuellement disposés en omettant un ou plusieurs paliers (2).

9. Dispositif selon une ou plusieurs des revendications 1 à 6,
**caractérisé en ce que**
dans le cas d'une pièce (3) comprenant plusieurs paliers (2) alignés, deux mandrins de craquage (4) diamétralement opposés dans le dispositif de coupure par rupture (1) servent à la coupure par rupture dans un segment.
